# EUROPÄISCHE PATENTANMELDUNG

(11) **EP 1 998 026 A2**
(43) Veröffentlichungstag der Anmeldung: **03.12.2008**
(21) Anmeldenummer: 08156336.3
(22) Anmeldetag: 16.05.2008
(51) Int. Cl.: F02C 6/12, F04D 29/44

(54) **Ladeeinrichtung**

(30) Priorität: 30.05.2007 DE 102007025128
(71) Anmelder: Bosch Mahle Turbo Systems GmbH & Co. KG, 70376 Stuttgart (DE)
(72) Erfinder: Hale, Thomas, Northampton, Northamptonshire NN1 3RR (GB)
(74) Vertreter: Bongen, Renaud & Partner

(57) **Zusammenfassung**

Die vorliegende Erfindung betrifft Ladeeinrichtung (1), insbesondere ein Abgasturbolader für ein Kraftfahrzeug, mit einer in einem Gehäuse (2) drehbar gelagerten Welle (3), die einenends ein Verdichterrad (4) und anderenends ein Turbinerad trägt, wobei das Verdichterrad (4) im Betrieb eine Luftströmung (6) einem radial außerhalb des Verdichterrades (4) gelegenen Diffusoreingang (7) zuleitet. Erfindungswesentlich ist dabei, dass eine das Verdichterrad (4) radial umgebende und in Strömungsrichtung vor dem Diffusoreingang (7) angeordnete Leitschaufeleinrichtung (9) mit verstellbaren Leitschaufeln (10) vorgesehen ist, mit welcher zumindest ein Strömungswinkel der dem Diffusoreingang (7) zugeleiteten Luftströmung (6) einstellbar ist.

## Beschreibung

Die vorliegende Erfindung betrifft eine Ladeeinrichtung, insbesondere einen Abgasturbolader für ein Kraftfahrzeug, gemäß dem Oberbegriff des Anspruchs 1.

Eine derartige gattungsgemäße Ladeeinrichtung ist beispielsweise aus der US 2006/0112690 A1 bekannt.

Eine Ladeeinrichtung, wie beispielsweise ein Abgasturbolader, wird im modernen Kraftfahrzeugbau üblicherweise zur Leistungssteigerung von Kolbenmotoren durch Erhöhung des Luftmengen- und Kraftstoffdurchsatzes pro Arbeitstakt eingesetzt. Dabei erhöht die Ladeeinrichtung den Druck, mit welchem Luft in den Ansaugtrakt des Motors eingeleitet werden kann, so dass mehr Sauerstoff zur Verbrennung einer entsprechend größeren Kraftstoffmenge zur Verfügung steht. Üblicherweise weist eine derartige Ladeeinrichtung auch einen sogenannten Diffusor auf, mit welchem ein von einem Verdichterrad der Ladeeinrichtung erzeugte Gasströmung verlangsamt und deren Gasdruck erhöht werden kann. Da insbesondere Verbrennungsmotoren in Kraftfahrzeugen über eine große Bandbreite an Drehzahl und Last mit hohem Wirkungsgrad arbeiten sollen, ist es erforderlich, den dem Diffusor zugeleiteten Luftmassenstrom an die jeweilige Drehzahl beziehungsweise Last des Motors anpassen zu können. Insbesondere bei geringen Motordrehzahlen dreht sich das Verdichterrad der Ladeeinrichtung entsprechend langsam und kann daher oftmals nicht für den erforderlichen Ladedruck sorgen. Die das Verdichterrad verlassende Luftströmung besitzt eine radiale Geschwindigkeitskomponente, welche proportional zu einem Luftmassenstrom ist und eine tangentiale Geschwindigkeitskomponente, welche proportional zu einer Drehzahl des Verdichterrades ist. Die Beeinflussung dieser beiden Geschwindigkeitskomponenten erlaubt eine Steuerung des Luftmassenstroms und des Drucks und dadurch eine bedarfsgerechte Ladeluftzuführung.

Die vorliegende Erfindung beschäftigt sich mit dem Problem, eine verbesserte Ausführungsform für eine gattungsgemäße Ladeeinrichtung anzugeben, welche insbesondere einen Einsatz über eine große Drehzahlbreite ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, zwischen einem Verdichterrad und einem Diffusor einer Ladeeinrichtung eine Leitschaufeleinrichtung mit verschiedenen, einstellbaren Leitschaufeln anzuordnen und dadurch Einfluss auf die tangentialen und radialen Geschwindigkeitskomponenten der vom Verdichterrad beschleunigten Luftströmung und indirekt damit Einfluss auf die Leistung der Ladeeinrichtung zu nehmen. Über die Leitschaufeleinrichtung mit den verstellbaren Leitschaufeln lässt sich ein Strömungswinkel der einem Diffusoreingang zugeleiteten Luftströmung variieren, wodurch sowohl ein Luftmassenstrom als auch ein Druck der Luftströmung an bestimmte Motorbetriebszustände anpassbar sind. Insbesondere lässt sich somit die dem Verbrennungsmotor zur Verbrennung zugeführte Luftströmung an unterschiedliche Last- und Drehzahlzustände des Verbrennungsmotors bedarfsgerecht anpassen. Beispielsweise wird ein hoher Luftmassenstrom bei gleichzeitig geringem Druck durch eine erhöhte radiale Geschwindigkeitskomponente der das Verdichterrad verlassenden Luftströmung erreicht, während ein hoher Druck und ein geringer Luftmassenstrom durch eine Erhöhung der tangentialen Geschwindigkeitskomponente der das Verdichterrad verlassenden Luftströmung realisierbar ist. Hierbei wird die Erkenntnis genutzt, dass die radiale Geschwindigkeitskomponente proportional zum Luftmassenstrom und die tangentiale Geschwindigkeitskomponente proportional zur Drehzahl des Verdichterrades ist. Dadurch kann die erfindungsgemäße Ladeeinrichtung in einem deutlich vergrößerten Kennfeld in einem deutlich größeren Drehzahlbereich eingesetzt werden.

Gemäß einer vorteilhaften Weiterbildung der erfindungsgemäßen Lösung weist die Leitschaufeleinrichtung ein äußeres und ein koaxial dazu angeordnetes inneres Ringelement auf, welche bezüglich ihrer Achsen zueinander verdrehbar sind und wobei die verstellbaren Leitschaufeln einerseits am inneren Ringelelement und andererseits am äußeren Ringelement derart gelagert sind, dass eine Verdrehung des inneren Ringelementes relativ zum äußeren Ringelement eine Verstellung der Leitschaufel und damit eine Veränderung eines Abströmwinkels der Luftströmung bewirkt. Durch den Aufbau der Leitschaufeleinrichtung mit einem inneren und einem äußeren Ringelement und dem daran gelagerten Leitschaufeln kann eine konstruktiv einfache und gleichzeitig technisch ausgereifte Lösung präsentiert werden, welche sich insbesondere durch geringe Herstellungskosten einerseits und eine genaue Justierbarkeit andererseits auszeichnet.

Zweckmäßig sind die Leitschaufeln einteilig mit dem inneren oder dem äußeren Ringelement ausgebildet, insbesondere sind sie an eines dieser Ringelemente angespritzt. Da die erfindungsgemäße Leitschaufeleinrichtung auf der Luftseite der Ladeeinrichtung angeordnet ist, kann für diese Kunststoff zum Einsatz kommen, welcher einerseits die Herstellungskosten weiter reduzieren hilft und andererseits durch moderne Spritzgusstechniken besondere Geometrien ermöglicht. Durch das Anspritzen der Leitschaufeln an eines der beiden Ringelemente lässt sich beispielsweise der Zusammenbau der Leitschaufeleinrichtung deutlich vereinfachen, wodurch Montagekosten eingespart werden können. Selbstverständlich ist alternativ auch denkbar, dass die Leitschaufeln als separate Bauteile ausgebildet sind, wobei die Leitschaufeln und/oder das äußere Ringelement und/oder das innere Ringelement aus Kunststoff oder aus Metall ausgebildet sein können.

Bei einer weiteren vorteilhaften Weiterbildung der Erfindung ist eine pneumatisch, elektrisch oder hydraulisch betriebene Stelleinrichtung zum Verstellen eines mit der Leitschaufeleinrichtung verbundenen Stellgliedes und damit zum Verstellen der Leitschaufeln vorgesehen. Insbesondere eine elektrisch betriebene Stelleinrichtung lässt sich einerseits kostengünstig herstellen und ermöglicht andererseits eine hochpräzise Stellbewegung, wodurch die dem Diffusor zugeführte Luftströmung besonders exakt einstellbar ist. Denkbar ist hierbei auch, dass die Stelleinrichtung mit einer Motorsteuerung, insbesondere einem elektronischen Motormanagementsystem, verbunden ist und von diesem gesteuert wird, wodurch eine an jeweilige Last- und Drehzahlzustände des Motors angepasste Luftzuführung erfolgen kann und dadurch auch die Leistung des Verbrennungsmotors gesteigert werden kann.

Zweckmäßig sind die Leitschaufeln über ein erstes Eingriffselement, beispielsweise einen Zapfen, am inneren Ringelement drehbar und über ein zweites Eingriffselement, beispielsweise ebenfalls ein Zapfen, am äußeren Ringelement sowohl drehbar als auch in einer Nut translatorisch verstellbar gelagert oder umgekehrt. Dies bedeutet, dass zur Verstellung der Leitschaufeln das innere Ringelement relativ zum äußeren Ringelement verdreht werden muss, wobei während dieses Verdrehvorganges das zweite Eingriffselement der jeweiligen Leitschaufeln in der am äußeren Ringelement vorgesehenen Nut entlang gleitet. Selbstverständlich kann diese Nut auch am inneren Ringelement angeordnet sein, wobei in beiden Fällen die Verdrehung des inneren Ringelementes relativ zum äußeren Ringelement eine Verstellung der Leitschaufeln bewirkt, was insbesondere dann von großem Vorteil ist, wenn das äußere Ringelement als integraler Bestandteil des Gehäuses der Ladeeinrichtung ausgebildet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch eine erfindungsgemäße Ladeeinrichtung im Bereich eines Diffusors,
- Fig. 2: eine Ansicht auf einen Diffusor,
- Fig. 3: eine Ansicht auf eine in einem Gehäuse der Lade-einrichtung angeordnete Leitschaufeleinrichtung,
- Fig. 4: eine erfindungsgemäße Leitschaufeleinrichtung,
- Fig. 5: eine Darstellung wie in Fig. 4, jedoch von einer anderen Seite,
- Fig. 6: eine weitere Ansicht auf die Leitschaufeleinrichtung,
- Fig. 7a, b: die Leitschaufeleinrichtung mit unterschiedlichen Leitschaufelstellungen.

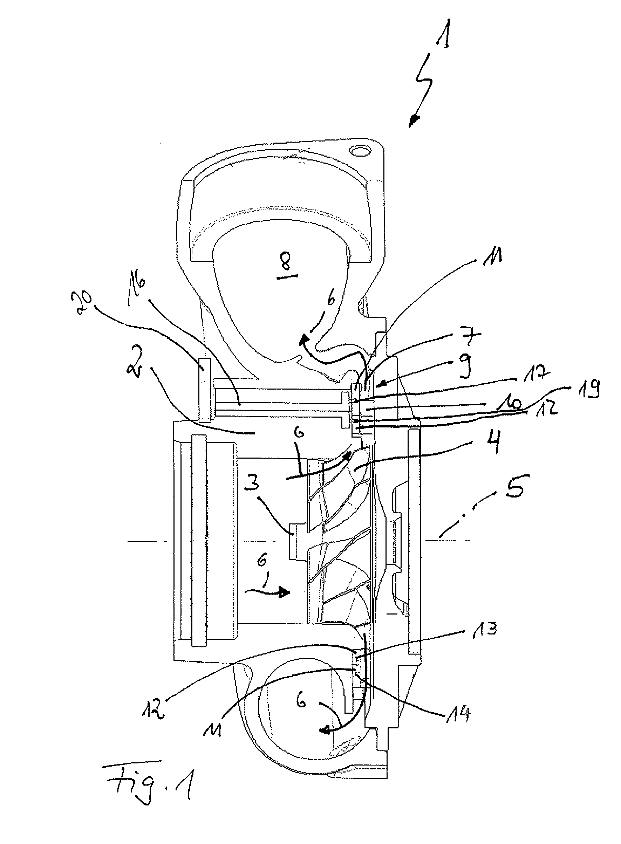

Entsprechend Fig. 1 weist eine erfindungsgemäße Ladeeinrichtung 1, welche hier in der Art eines Abgasturboladers für ein Kraftfahrzeug ausgebildet ist, ein Gehäuse 2 sowie eine in diesem drehbar gelagerte Welle 3 auf, die einenends ein Verdichterrad 4 und anderenends ein nicht gezeigtes und einem Abgasstrom ausgesetztes Turbinenrad trägt. Die Welle 3 rotiert dabei im Betrieb der Ladeeinrichtung 1 um deren Wellenachse 5. Dem vom Abgasstrom über die Welle 3 angetriebenen Verdichterrad 4 fällt die Aufgabe zu, Luft für einen nicht gezeigten Verbrennungsmotor mit erhöhtem Druck in einen Ansaugtrakt des Verbrennungsmotors zu drücken. Hierdurch soll insbesondere die Leistungsfähigkeit des Verbrennungsmotors gesteigert werden, da bei einem normalen, als Saugmotor, ausgebildeten Kolbenmotor beim Betrieb desselben in einem hohen Drehzahlbereich im Ansaugtrakt ein so hoher Unterdruck erzeugt werden, dass dadurch die Leistungsfähigkeit des Kolbenmotors begrenzt wird. Durch die Ladeeinrichtung 1 kann dem Verbrennungsmotor pro Arbeitstakt mehr Luft bei einer entsprechend gesteigerten Kraftstoffmenge zugeführt werden, woraus die Leistungssteigerung resultiert.

Das Verdichterrad 4 leitet im Betrieb eine Luftströmung 6 einem radial außerhalb des Verdichterrades 4 gelegenen Diffusoreingang 7 und anschließend dem Diffusor 8 zu. Im Diffusor wird die Luftströmung 6 verlangsamt und dabei der Luftdruck erhöht. Der Diffusor stellt somit im Prinzip die Umkehr einer Düse dar und dient darüber hinaus zur Rückgewinnung von kinetischer Energie.

Da insbesondere Verbrennungsmotoren von Kraftfahrzeugen über eine weite Bandbreite bezüglich ihrer Last- und Drehzahl eine ausreichend hohe Leistung erbringen sollen, muss die Ladeeinrichtung 1 derart ausgebildet sein, dass sie stets die für einen optimalen Wirkungsgrad des Verbrennungsmotors erforderliche Luftmenge dem Ansaugtrakt des Verbrennungsmotors zuführt. Aufgrund der Tatsache, dass auch bei geringen Drehzahlen des Verbrennungsmotors, bei welchen sich das Verdichterrad 4 naturgemäß langsamer dreht, ein ausreichend hoher Ladedruck zur Verfügung stehen sollte, muss die Leistung der Ladeeinrichtung 1 von der Drehzahl des Verdichterrades 4 entkoppelt werden. Die Erfindung schlägt vor, bei einer gleichbleibenden Drehzahl des Verdichterrades 4 den Luftmassenstrom und den in diesem herrschende Druck durch eine Beeinflussung einer radialen und einer tangentialen Geschwindigkeitskomponente der das Verdichterrad 4 verlassenden Luftströmung 6 zu steuern. Dabei ist die radiale Geschwindigkeitskomponente proportional zum Luftmassenstrom, während die tangentiale Geschwindigkeitskomponente proportional zur Drehzahl beziehungsweise Umdrehungsgeschwindigkeit des Verdichterrades 4 ist. Dies bedeutet, dass bei einem hohen Luftmassenstrom und einem gleichzeitig niedrigerem Druck die vom Verdichterrad 4 beförderte Luftströmung 6 eine größere radiale Geschwindigkeitskomponente aufweist, während bei einem höheren Druck und einem geringern Luftmassenstrom die Luftströmung 6 das Verdichterrad 4 eher tangential verlässt.

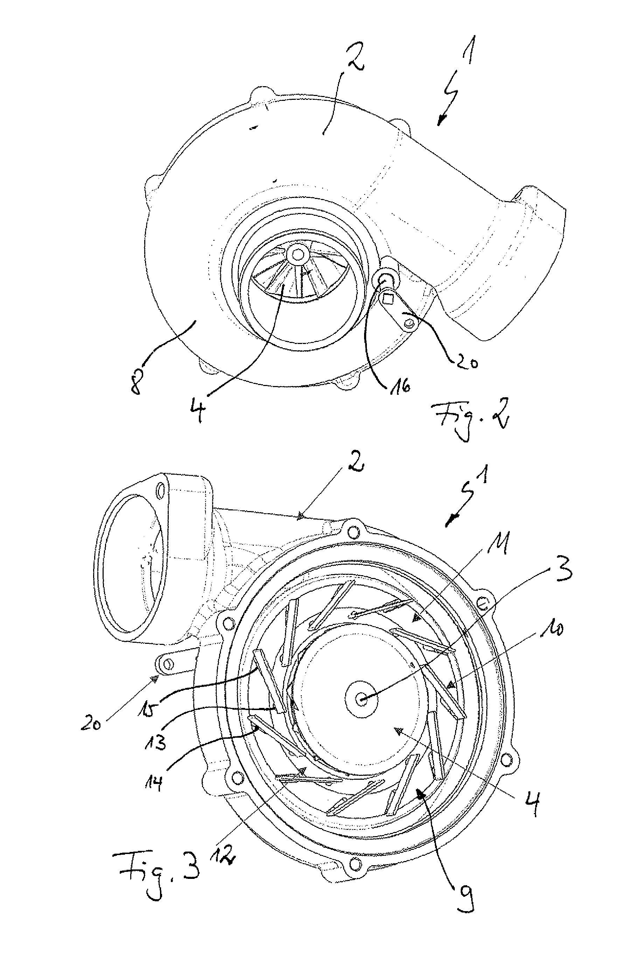

Zur Beeinflussung der radialen und der tangentialen Geschwindigkeit der das Verdichterrad 4 verlassenden Luftströmung 6 ist erfindungsgemäß eine das Verdichterrad 4 radial umgebende und in Strömungsrichtung vor dem Diffusoreingang 7 angeordnete Leitschaufeleinrichtung 9 mit verstellbaren Leitschaufeln 10 vorgesehen (vgl. auch die Fig. 3 bis 7). Mit Hilfe dieser Leitschaufeln 10 kann ein Strömungswinkel der Luftströmung 6 bezüglich des Diffusoreingangs 7 eingestellt werden.

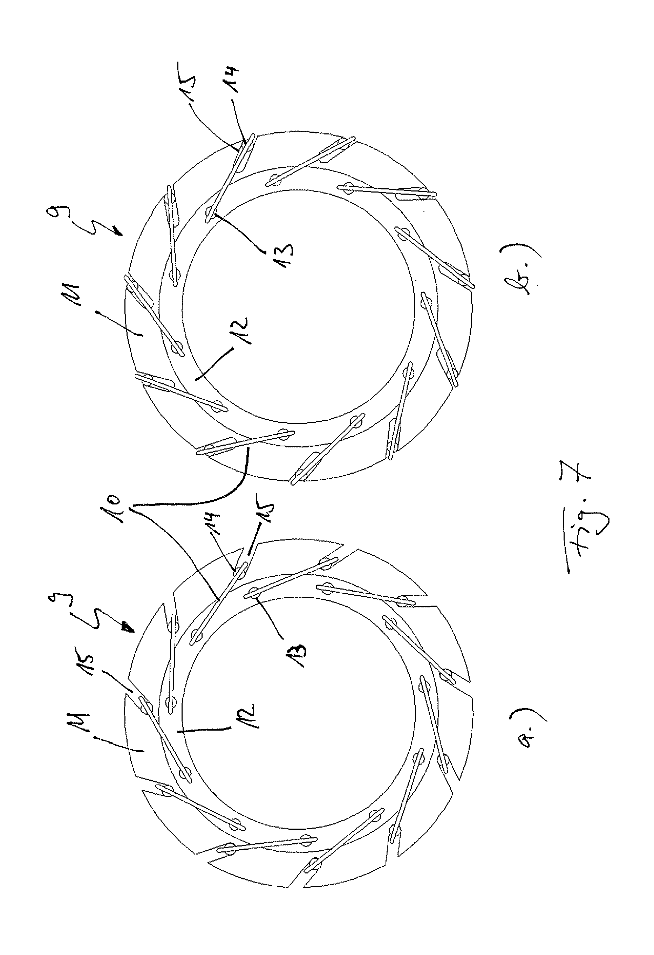

Gemäß den Fig. 3 bis 7 weist dabei die Leitschaufeleinrichtung 9 ein äußeres Ringelement 11 und ein koaxial dazu angeordnetes inneres Ringelement 12 auf, welche bezüglich der Wellenachse 5 zueinander verdrehbar sind. Die verstellbaren Leitschaufeln 10 sind dabei einerseits am inneren Ringelement 12 und andererseits am äußeren Ringelement 11 derart gelagert, dass eine Verdrehung der beiden Ringelemente 11, 12 relativ zueinander eine Verstellung der Leitschaufeln 10 bewirkt (vgl. Fig. 7a und b).

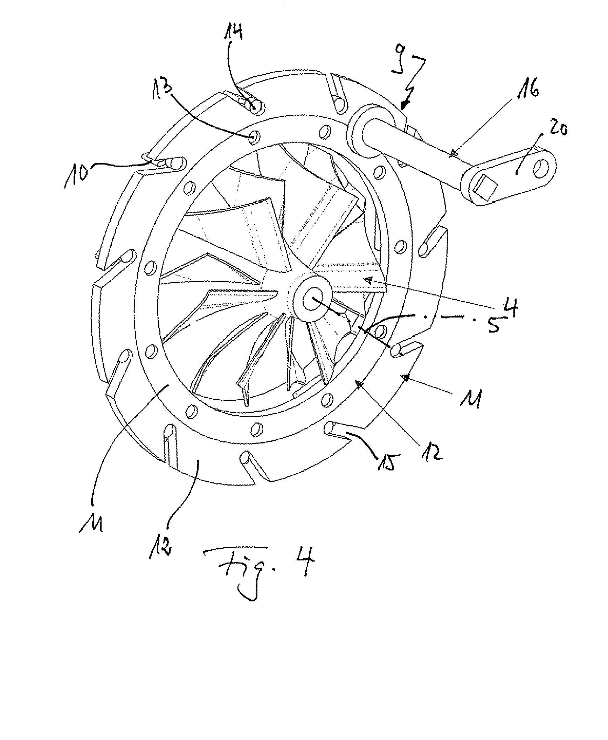

Die Leitschaufeln 10 sind dabei über ein erstes Eingriffselement 13 am inneren Ringelement 12 drehbar gelagert und über ein zweites Eingriffselement 14 am äußeren Ringelement 11 sowohl drehbar als auch in einer Nut 15 translatorisch verstellbar gelagert (vgl. hierzu insbesondere die Fig. 4 bis 6). Denkbar ist selbstverständlich auch, dass die Nuten 15 am inneren Ringelement 12 angeordnet sind, während die Leitschaufeln 10 am äußeren Ringelement 11 lediglich drehbar über ihr jeweiliges Eingriffselement 14 gelagert sind.

Um das innere Ringelement 12 relativ zum äußeren Ringelement 11 verdrehen zu können, ist ein Stellglied 16 vorgesehen, welches über einen ersten Zapfen 17 in eine Ausnehmung 18 am äußeren Ringelement 11 und über einen zweiten Zapfen 19 in eine Ausnehmung 18' am inneren Ringelement 12 eingreift. An seinem den Zapfen 17 und 19 abgewandten Ende weist das Stellglied 16 einen Stellhebel 20 auf, welcher mit einer nicht gezeigten Stelleinrichtung, insbesondere einer pneumatisch, elektrisch oder hydraulisch betriebenen Stelleinrichtung wirkungsverbunden ist. Diese Stelleinrichtung ist ihrerseits wiederum vorzugsweise mit einer Motorsteuerung, insbesondere mit einem Motormanagement-System des Kraftfahrzeuges verbunden. Selbstverständlich ist die gemäß den Fig. 1 bis 6 dargestellte Art des Stellgliedes 16 rein exemplarisch zu verstehen, so dass beispielsweise anstatt des Stellhebels 20 auch ein Stirnradgetriebe beziehungsweise ein Schneckengetriebe eine Wirkungsverbindung zu der Stelleinrichtung schaffen können.

Aus den Fig. 3, 5 und 7 ist erkennbar, dass die Leitschaufeln 10 eine im wesentlichen ebene Form aufweisen, wobei auch denkbar ist, dass die Leitschaufeln 10 in Strömungsrichtung der Luftströmung 6 gekrümmt, insbesondere in der Art einer Tragfläche, ausgebildet sind. Ebenso können die Leitschaufeln 10, wie in den Fig. 3, 5 und 7 gezeigt, als separate Bauteile ausgebildet sein oder aber einteilig mit dem inneren oder dem äußeren Ringelement 12, 11 hergestellt, insbesondere an eines dieser Ringelemente 11, 12 angespritzt sein. Letzte Variante ist für eine aus Kunststoff hergestellte Leitschaufeleinrichtung 9 denkbar.

Da das Verdichterrad 4 auf der Luftseite der Lagereinrichtung 1 angeordnete ist und dadurch lediglich einer begrenzten Temperaturbelastung ausgesetzt ist, kann für die Leitschaufeleinrichtung 9 beziehungsweise die Leitschaufeln 10 sowie für die beiden Ringelemente 11 und 12 problemlos Kunststoff eingesetzt werden. Alternativ können aber auch einzelne Komponenten der Leitschaufeleinrichtung 9 aus Metall ausgebildet sein.

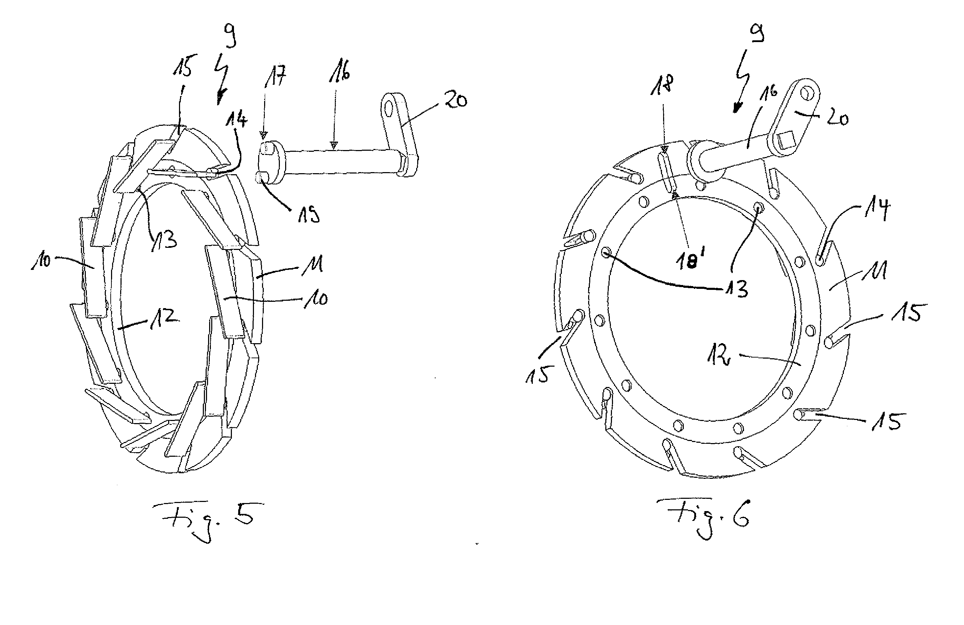

Bei einer Ausbildung der Leitschaufeln 10 aus Kunststoff, können diese derart flexibel ausgebildet werden, dass sie sich bei einem Verstellen der Leitschaufeleinrichtung 9 beispielsweise krümmen können. Für diesen Fall wären die gemäß den Fig. 5 bis 7 gezeigte Nuten 15 im äußeren Ringelement 11 ebenfalls als reine Ausnehmungen ausgebildet, in welchen der Zapfen 14 drehbar gelagert ist, welche jedoch eine translatorische Verstellung des Zapfens 14 nicht zulassen.

Gelagert werden kann die Leitschaufeleinrichtung 9 beispielsweise dadurch, dass das äußere Ringelement 11 in einer am Gehäuse 2 der Ladeeinrichtung 1 vorgesehenen und nicht gezeigten Ausnehmung befestigt ist. Gemäß einer bevorzugten Ausführungsform kann auch vorgesehen sein, dass das äußere Ringelement 11 integraler Bestandteil des Gehäuses 2 der Ladeeinrichtung 1 ist. Auch kann entgegen den in den Fig. 7a und b gezeigten Ausführungsformen der Leitschaufeln 10 vorgesehen sein, dass diese sich bezüglich ihrer Länge verjüngen oder verdicken, das heißt dass die Leitschaufeln 10 in ihrer Länge eine unterschiedliche Dicke aufweisen.

Zurückkommend auf die Fig. 1 und 2 ist erkennbar, dass das Stellglied 16 das Gehäuse 2 durchdringt und der Stellhebel 20 außerhalb des Gehäuses 2 leicht zugänglich beziehungsweise leicht verbindbar mit der Stelleinrichtung angeordnet ist. Dabei kann über das Stellglied 16 lediglich entweder das äußere Ringelement 11 oder das innere Ringelement 12 bezüglich des anderen Ringelementes 11, 12 verdreht werden oder aber es können beide Ringelemente 11, 12 relativ zueinander verdreht werden. Die Stellung der Leitschaufeln 10 kann beispielsweise über einen digitalen oder analogen nicht gezeigten Sensor erfolgen, welcher beispielsweise einen Drehwinkel des Stellgliedes 16 erfasst. Selbstverständlich ist auch das gezeigte Stellglied 16 lediglich rein exemplarisch zu verstehen, so dass auch andere Hebelanordnungen zum Verstellen der Leitschaufeleinrichtung 9 von der Erfindung mit umfasst sein sollen.

Gemäß den Fig. 7a und b sind nun zwei Extremstellungen der Leitschaufeleinrichtung 9 gezeigt, wobei gemäß Fig. 7a die Leitschaufeln 10 einen kleineren Winkel bezüglich einer Tangente an das äußere oder innere Ringelement 11, 12 aufweisen, während gemäß Fig. 7b dieser Winkel deutlich größer ist. Bei einer Stellung der Leitschaufeln 10, wie sie in Fig. 7a gezeigt ist, erfährt daher die Luftströmung 6 eine höhere tangentiale Geschwindigkeit, während sie bei einer Stellung der Leitschaufeln 10 gemäß Fig. 7b eine höhere radiale Geschwindigkeit erfährt.

## Patentansprüche

1. Ladeeinrichtung (1), insbesondere ein Abgasturbolader für ein Kraftfahrzeug,
- mit einer in einem Gehäuse (2) drehbar gelagerten Welle (3), die einendens ein Verdichterrad (4) und anderenends ein Turbinerad trägt,
- wobei das Verdichterrad (4) im Betrieb eine Luftströmung (6) einem radial außerhalb des Verdichterrades (4) gelegenen Diffusoreingang (7) zuleitet,
**dadurch gekennzeichnet,**
**dass** eine das Verdichterrad (4) radial umgebende und in Strömungsrichtung vor dem Diffusoreingang (7) angeordnete Leitschaufeleinrichtung (9) mit verstellbaren Leitschaufeln (10) vorgesehen ist, mit welcher zumindest ein Strömungswinkel der dem Diffusoreingang (7) zugeleiteten Luftströmung (6) einstellbar ist.

2. Ladeeinrichtung nach Anspruch 1,
**dadurch gekennzeichnet,**
- **dass** die Leitschaufeleinrichtung (9) ein äußeres Ringelement (11) und ein koaxial dazu angeordnetes inneres Ringelement (12) aufweist, welche bezüglich deren Achse (5) zueinander verdrehbar sind,
- **dass** die verstellbaren Leitschaufeln (10) einerseits am inneren Ringelement (12) und andererseits am äußeren Ringelement (11) derart gelagert sind, dass eine Verdrehung des inneren Ringelements (12) relativ zum äußeren Ringelement (11) eine Verstellung der Leitschaufeln (10) bewirkt.

3. Ladeeinrichtung nach Anspruch 2,
**dadurch gekennzeichnet,**
**dass** die Leitschaufeln (10) über ein erstes Eingriffselement (13) am inneren Ringelement (12) drehbar und über ein zweites Eingriffselement (14) am äußeren Ringelement (11) sowohl drehbar als auch in einer Nut (15) translatorisch verstellbar gelagert sind oder umgekehrt.

4. Ladeeinrichtung nach einem der Ansprüche 2 bis 3,
**dadurch gekennzeichnet,**
**dass** das äußere Ringelement (11) Bestandteil des Gehäuses (2) der Ladeeinrichtung (1) ist.

5. Ladeeinrichtung nach einem der Ansprüche 1 bis 4,
**dadurch gekennzeichnet,**
**dass** ein Stellglied (16) vorgesehen ist, welches über einen ersten Zapfen (17) in eine Ausnehmung (18) am äußeren Ringelement (11) und über einen zweiten Zapfen (19) in eine Ausnehmung (18') am inneren Ringelement (12), insbesondere in eine jeweilige Radialnut, derart eingreift, dass eine Verdrehung des Stellgliedes (16) eine Verdrehung des inneren Ringelements (12) relativ zum äußeren Ringelement (11) und dadurch eine Verstellung der Leitschaufeln (10) bewirkt.

6. Ladeeinrichtung nach Anspruch 5,
**dadurch gekennzeichnet,**
**dass** eine pneumatisch, elektrisch oder hydraulisch betriebene Stelleinrichtung zum Verstellen des Stellgliedes (16) und damit zum Verstellen der Leitschaufeln (10) vorgesehen ist.

7. Ladeeinrichtung nach einem der Ansprüche 2 bis 6,
**dadurch gekennzeichnet,**
- **dass** die Leitschaufeln (10) einteilig mit dem inneren oder dem äußeren Ringelement (12, 11) ausgebildet, insbesondere an eines dieser Ringelemente (11, 12) angespritzt sind, oder
- **dass** die Leitschaufeln (10) als separate Bauteile hergestellt sind.

8. Ladeeinrichtung nach einem der Ansprüche 2, 3, 5 bis 7,
**dadurch gekennzeichnet,**
**dass** zumindest das äußere Ringelement (11) in einer am Gehäuse (2) der Ladeeinrichtung (1) vorgesehenen Ausnehmung gelagert ist.

9. Ladeeinrichtung nach einem der Ansprüche 1 bis 8,
**dadurch gekennzeichnet,**
**dass** die Leitschaufeln (10) in Strömungsrichtung der Luftströmung (6) gekrümmt ausgebildet sind.

10. Ladeeinrichtung nach einem der Ansprüche 1 bis 9,
**dadurch gekennzeichnet,**
- **dass** zumindest Teile der Leitschaufeleinrichtung (9) aus Metall oder aus Kunststoff ausgebildet sind, und/oder
- **dass** die Leitschaufeln (10) flexibel ausgebildet sind, und/oder
- **dass** die Leitschaufeln (10) hinsichtlich ihrer Länge eine unterschiedliche Dicke aufweisen.
